# EUROPEAN PATENT SPECIFICATION

(11) **EP 3 561 178 B1**
(45) Date of publication and mention of the grant of the patent: **05.08.2026**
(21) Application number: 19170629.0
(22) Date of filing: 23.04.2019
(51) Int. Cl.: D21H 19/38, D21H 19/40, D21H 19/54, D21H 19/58, D21H 19/60, D21H 19/82, D21H 21/16

(54) **CELLULOSE-BASED SUBSTRATE FOR FOODSTUFF PACKAGING MATERIAL**
CELLULOSEBASIERTES SUBSTRAT FÜR LEBENSMITTELVERPACKUNGSMATERIAL
SUBSTRAT À BASE DE CELLULOSE POUR MATÉRIAU D'EMBALLAGE DE DENRÉES ALIMENTAIRES

(30) Priority: 27.04.2018 SE 1850510
(43) Date of publication of application: 30.10.2019
(73) Proprietor: Fiskeby Board AB, 601 02 Norrköping (SE)
(72) Inventor: Allard, Jessica, 603 37 Norrköping (SE)
(74) Representative: AWA Sweden AB

(56) References cited:
- EP-A1- 0 909 851
- WO-A1-2004/018769
- WO-A1-2010/042162
- WO-A1-2010/141581
- WO-A1-2011/084692
- WO-A1-2013/164646
- WO-A1-2014/006269
- CN-A- 105 369 677
- US-A1- 2016 348 318
- US-A1- 2017 328 005

## Description

### Technical field

The disclosure is related to a cellulose-based substrate for foodstuff packaging material, the substrate having a coating layer for reducing penetration of mineral oils from/through the packaging material into the foodstuff, a food stuff packaging material comprising such a substrate, and a method for producing such a substrate.

### Background

Recyclability is an important measure in the environmental cause and certainly applicable for packaging material such as cellulose-based packaging material, e.g. paperboard. To get the highest possible return from recyclable materials they should be used in as many applications as possible. Recycled cellulose-based packaging material can for example be used for food stuff packaging applications. Research has shown, however, that there is a risk that harmful chemicals, such as mineral oil, migrate from the recycled fibres in the paperboard/cardboard packaging material into foodstuff contained in the packaging material. Such mineral oils, which are believed to mostly originate from printing ink remainders in the recycled fibres, are mineral oil saturated hydrocarbons (MOSH) and mineral oil aromatic hydrocarbons (MOAH).

One approach to reduce the migration of such contaminants into the foodstuff is to apply a barrier film on the surface of the paperboard/cardboard packaging material facing the foodstuff. Different barrier films have been developed to prevent unwanted and harmful mineral oil migration into foodstuff from recycled cardboard/paperboard packaging material. For example, in US2014113152A is discussed a packaging material with a barrier layer comprising polyvinyl alcohol and cross-linking agents, in JP2016113210A is discussed a mineral oil barrier comprising olefin-based resin, and in US2016222592A is shown a packaging material having a starch-based barrier coating. In addition, WO2013 164646 discloses a coated fibre based material comprising a fibre based substrate comprising microfibrilated cellulose and barrier coatings applied thereon.

### Summary

An object of the present invention is to provide a cellulose-based substrate for foodstuff packaging material, the substrate having a coating layer arranged on a surface thereof for reducing penetration of mineral oils from/through the packaging material into the foodstuff.

Other objectives are to provide a foodstuff packaging material comprising such a substrate and a method for producing such a substrate.

The invention is defined by the appended independent claims. Embodiments are set forth in the appended dependent claims and in the figures.

According to a first aspect there is provided a substrate for foodstuff packaging material, the substrate comprising cellulose fibres, wherein the cellulose fibres of the substrate are recycled cellulose fibres, and having a first major surface opposite a second major surface and a first coating layer arranged on at least a portion of the first major surface, wherein the first coating layer has a total dry matter weight of 4-15 g/m² and comprises a composition of starch, amounting to 20-45 percent by weight of the total dry matter weight of the first coating layer, latex, amounting to 10-35 percent by weight of the total dry matter weight of the first coating layer, wherein the latex is selected from a group comprising styrene-butadiene latex, styrene-acrylate latex, polyvinylacetate latex or any combination thereof, and pigment, amounting to 35-50 percent by weight of the total dry matter weight of the first coating layer, wherein a ratio of latex to starch is 0.25:1 to 2.5:1, wherein the substrate further comprises an intermediate coating layer arranged on the first major surface of the substrate beneath the first coating layer, wherein the intermediate coating layer has a total dry matter weight of 2-3 g/m² and comprises starch, amounting to 20-50 percent by weight of the total dry matter weight of the intermediate coating layer, and pigment, amounting to 50-80 percent by weight of the total dry matter weight of the intermediate coating layer.

With food stuff packaging material is here meant packaging material suitable for holding liquid and/or solid food products, e.g. cereals, chocolate, milk etc.

The first major surface of the substrate, which is provided with the first coating layer, may be arranged in the food packaging material to face foodstuff contained in the packaging material and the second major surface of the substrate may be arranged to face away from the foodstuff, i.e. the first coating layer may be arranged to cover at least a portion of the inside of the packaging material. The coated first major surface of the substrate could be in direct contact with foodstuff contained in the packaging material or in indirect contact with the foodstuff, e.g. via an inner package, such as for example a plastic bag.

The packaging material may be composed of one substrate or a portion of a substrate folded into a final packaging material. Alternatively, the substrate may constitute a portion of the packaging material, e.g. one or more sidewalls of the packaging material.

The substrate may be a substantially planar substrate. The substrate may be a sheet-like cellulose based substrate, e.g. paperboard. The substrate may be a continuous substrate, e.g. a substrate web.

The cellulose fibres may be fresh cellulose fibres. Additionally, or alternatively, the cellulose fibres may comprise recycled cellulose fibres. The substrate may comprise 30-100% recycled cellulose fibres, preferably 80-100%. The cellulose fibres may comprise bleached or unbleached hardwood pulp, bleached or unbleached softwood pulp, bleached or unbleached mechanical pulp, bleached or unbleached chemi-mechanical pulp or recirculated broke pulp used in paperboard production, or mixtures thereof. Recirculated broke pulp may also be used in any of the above-mentioned pulps, mechanical pulps and chemi-mechanical pulps.

The dimensions of the substrate could be any shape, size and thickness and be adapted to the packaging material and foodstuff in question. A typical substrate thickness ranges from 250-750 µm. The substrate basis weight may be 250-550 g/m². The first major surface of the substrate may be even to a certain degree with a Bendtsen surface roughness value of less than 3000 ml/min.

The first coating layer may be arranged directly on the first major surface of the substrate. Alternatively, there may be arranged one or more intermediate layers, e.g. a surface sizing layer, on the first major surface of the substrate beneath the first coating layer. Another coating layer may be provided on the second major surface of the substrate, e.g. to provide increased brightness and printing properties of the second major surface of the substrate.

The first coating layer is arranged on at least a portion of the first major surface and may cover 10-100% of the first major surface. At least the portion of the first major surface of the substrate arranged to be in direct or indirect contact with foodstuff contained in the packaging material may be coated with the first coating layer.

The first coating layer may comprise one coating layer or may alternatively consist of a set of 2-5, 2-4 or 2-3 sublayers arranged on each other on the first major surface.

The first coating layer comprises starch, pigment and latex. The first coating layer may additionally comprise an additive such as a thickening agent for rheology control. The first coating layer consists essentially of pigment, starch and latex. The first coating layer consists of pigment, starch and latex.

The first coating layer has a total dry matter weight of 4-15 g/m². The first coating layer is an even coating layer with a maximum variation in dry matter weight of less than 1 g/m², i.e. the first coating layer on the first major surface of the substrate has a total dry matter weight of 4±1 to 15±1 g/m². For example, a coating layer dry matter weight on the first major surface of the substrate may be 8 g/m² but in some points/areas the dry matter weight may be lower, down to 7, or higher, up to 9 g/m².

The first coating layer has a somewhat porous surface structure not to affect subsequent gluing of the substrate into packaging materials negatively. The first coating layer has no or few pinholes going through the first coating layer. With a dry matter weight below 4 g/m² the first coating layer may not completely cover the first major surface, resulting in needle sized pinholes in the first coating layer after drying of the first coating layer and an inferior first coating layer compared to a coating with a higher dry matter weight. For a first coating layer having a dry matter weight higher than 15 g/m² pinholes might occur in the coating layer during drying of the surface coating. This may be caused by film formation on the surface of the coating layer, which blocks drying of the section of the coating layer closer to the substrate surface. A higher coat weight may also increase the risk of blocking and the risk of damaging the coating layer in case of mechanical disturbance while e.g. printing and processing the substrate.

A thickness of such a first coating layer may be 1-100 µm, or 5-10 µm.

It was surprisingly found that a substrate having a first coating layer with a total dry matter weight of 4-15 g/m² and comprising starch, amounting to 20-45 percent by weight of the total dry matter weight of the first coating layer, latex, amounting to 10-35 percent by weight of the total dry matter weight of the first coating layer, and pigment, amounting to 35-55 percent by weight of the total dry matter weight of the coating layer, wherein a ratio of latex to starch is 0.25:1 to 2.5:1 in different tests showed a low hydrocarbon permeability of the coating layer compared to a non-coated substrate.

To be able to measure hydrocarbon permeability in a reliable and repeatable way extensive work has been put on developing methods for measuring mineral oil migration and to propose limit values on which to base legal requirements. Today, no legal requirements have been established. In the 4^{th} draft from the German Federal Ministry of Food, Agriculture and Consumer Protection (BMEL), published in 17-03-2017, is proposed, however, an upper limit of 0.08 mg/dm² for MOAHs migrating from paper board (expressed as 0.5 mg/kg of food). In the former 3^{rd} draft was included a proposal of 0.33 mg/dm² for MOSH, which, however, was withdrawn in the 4^{th} draft. The 4^{th} draft does not mention what method should be used for determination of mineral oil migration.

The German Research Institute ISEGA, Forschungs- und Untersuchungsgesellschaft mbH, performs a standardized analysis method for migration according to DIN EN 14338. In this method the migration of mineral oils, mineral oil saturated hydrocarbons (MOSH) and mineral oil aromatic hydrocarbons (MOAH), through a substrate may be tested as mg/dm² after 10 days at 40°C in Tenax (modified polyphenylene oxide). The mineral oil content in the Tenax is analysed and quantified by HPLC-GC-FID which separates the compounds according to volatility and molecular weight. MOSH of carbon chains with C20-35 are quantified as well as MOAH C16-35.

The permeability of the coating layer for hydrocarbons may also be tested as n-Heptane Vapor Transmission Rate (HVTR) in g/m²/day. Here, permeability cups (68-3000 Vapometer EZ-Cups) were used and 9 ml of n-Heptane was added into each cup. A sample of the substrate (sample area 0.003068 m²) was arranged in the lid of the cup with the first coating layer facing into the cup. The cup was weighted after 10 minutes, after 1 hour and at two more times over a 24-hour period, after which the heptane vapor transmission rate was calculated from the cup weight loss over time. During the measurements, the cups were carefully positioned in a fume cupboard having an adequately controlled environment and humidity changes were adjusted by withdrawal of the weight difference of a reference substrate sample which was not mounted to a cup.

To illustrate how well the above described first coating layer increases the ability of a substrate to block migration of hydrocarbons from/through the substrate, a substrate without the first coating layer was measured in HVTR measurements to about 1600 g/m²/day, while a corresponding substrate arranged with the first coating layer resulted in a HVTR result which was below 70 g/m²/day. In tests with MOSH and MOAH migration in Tenax performed by ISEGA for the same substrate arranged with the first coating layer, the result was decreased by at least 70% compared to the substrate without the first coating layer.

This indicates that such a coating layer may fulfil the requirements of a barrier for use in packaging material for foodstuff for reducing penetration of unwanted and harmful hydrophobic substances such as mineral oils from/through the packaging material into the foodstuff contained in the packaging material. Mineral oils may be contained in e.g. ink remainders in recycled cellulose fibres used in the substrate or may originate from printing inks used to print on the second major surface of the substrate.

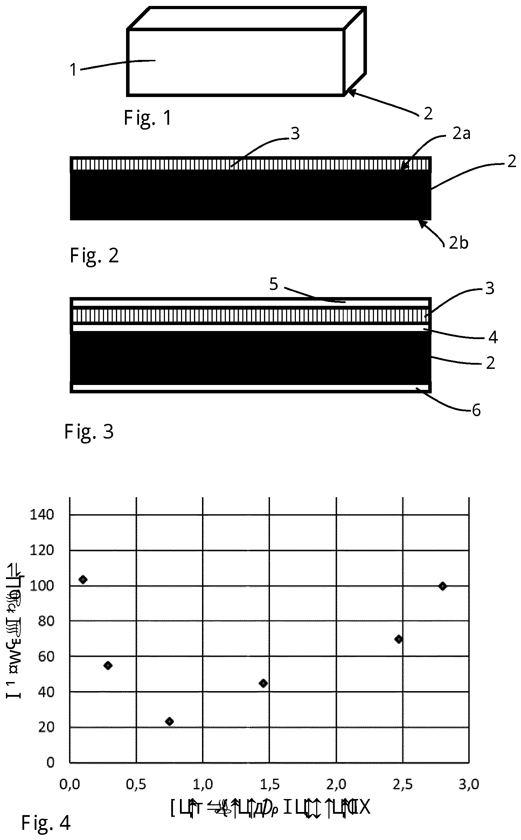

If the amount of the components, i.e. starch, latex and pigment, and/or the ratio of latex to starch in the first coating layer (in laboratory tests) was changed outside the above discussed intervals, this resulted in higher values in the HVTR analyses of such coating layers (this is also illustrated in Fig. 4), and, hence, in a substrate with a lower barrier quality, i.e. a larger amount of harmful substances may penetrate through the coating layer.

A small change of the amount of starch and latex from a ratio of latex:starch of 0.3 to 0.1 (keeping the amount of pigment at the same level) for a specific substrate resulted in an increase in HVTR from 55 to 100. A small change of the amount of starch and latex from a ratio of latex:starch of 2.45 to 2.8 (keeping the amount of pigment at the same level) for a specific substrate resulted in an increase in HVTR from 70 to 100. Hence, it is clear that the above identified intervals for the amount of the components, i.e. starch, latex and pigment, and the ratio of latex to starch, in the first coating layer identifies a limited range within which there is a clear improvement.

The coating composition, and especially the ratio of latex to starch, is crucial for obtaining a sufficiently impenetrable coating matrix for mineral oil hydrocarbons. Further, the presence of latex in the first coating has been shown to increase the flexibility of the coating layer to endure creasing and bending of the substrate. A coating layer without latex and only using starch for binder produces a more rigid matrix that easily cracks if the surface is disturbed.

30-100%, or 50-100%, or 70-100% of the cellulose fibres of the substrate may be recycled cellulose fibres.

With recycled cellulose fibres is here meant fibres originating from waste paper, waste paperboard and/or cardboard, which has been mechanically refined and not chemically de-inked. Plastics may be purged from the raw material while fillers and other components may remain in the recycled pulp.

The first coating layer may have a total dry matter weight of 4-10 g/m² or 4-8 g/m².

In the first coating layer, starch may amount to 25-40 or 30-35 percent by weight of the total dry matter weight of the coating layer.

In the first coating layer, latex may amount to 15-35 or 20-30 percent by weight of the total dry matter weight of the coating layer.

In the first coating layer, pigment may amount to 35-50 or 40-45 percent by weight of the total dry matter weight of the coating layer.

A ratio of latex to starch in the first coating layer may be 0.5:1 to 1:1.

The substrate may further comprise an intermediate coating layer arranged on the first major surface of the substrate beneath the first coating layer.

This intermediate coating layer may be a so-called surface sizing layer, which may be applied to a surface of the substrate to bind the cellulose fibres of the substrate to the surface to prevent dusting during printing. The thickness of such an intermediate coating layer is typically in the sub micrometre range.

The intermediate coating layer may have a total dry matter weight of 2-3 g/m² and may comprise starch, amounting to 20-50 percent by weight of the total dry matter weight of the intermediate coating layer, and pigment, amounting to 50-80 percent by weight of the total dry matter weight of the intermediate coating layer.

The starch of the intermediate coating layer may be the same starch as is used in the first coating layer, which may reduce costs and simplify the coating process.

A second coating layer may be arranged on at least a portion of the first coating layer, wherein the second coating layer may comprise poly ethylene.

The poly ethylene coating may be applied on the substrate through extrusion. The second coating layer may further increase water and fat resistance of the substrate. The barrier properties of the first coating layer may be substantially unaltered by the addition of the second coating layer.

The starch may be selected from a group comprising potato starch, maize starch, wheat starch, tapioca starch and pea starch, or any combination thereof.

The starch may be native starch, degraded starch or chemically modified starch. The starch may be potato starch, which starch comprise glucose units of higher molecular weight and exhibit higher viscosity at lower concentration than other starches because of the polyelectrolyte behaviour of the phosphate group on potato starch.

The molecular weight of the starch may be 200 000 to 5 000 000 g/mole.

The molecular weight of the starch may be 300 000 to 1 000 000 g/mole, but the preferred molecular weight may be dependent on a total dry content and flowability of the coating dispersion used for the coating the first coating layer on the substrate.

The latex is selected from a group comprising styrene-butadiene latex, styrene-acrylate latex, polyvinylacetate latex, or any combination thereof. In some non-claimed embodiments, said group also comprises biolatex.

The styrene-acrylate latex (SA) may be styrene-n-butyl acrylate latex. With biolatex is here meant a non-petroleum-based latex, e.g. a starch-based biolatex or a biolatex based on polysaccharide-based feedstocks derived from corn, potatoes or rice.

The latex used may have a particle size of 50-500, or 80-200 nm, or 90-120 nm and a glass transition temperature, Tg, between 5-20°C.

The pigment may be a platelet forming pigment forming platelets having a length ranging from 0.01 to 100 µm, a width of from 0.01 to 100 µm and a height ranging from 0.001 to 1 µm.

A preferred average particle size may be between 2-0.5 µm, and a form factor, defined as the length of a particle divided by the height, of 15-30:1. Rhombohedrical pigments, such as natural calcium carbonate, are not preferred.

The pigment may be selected from a group comprising kaolin, talc and a combination thereof.

The first coating layer may further comprise a thickening agent, amounting to 0.1-1.5 percent by weight of the total dry matter weight of the first coating layer, selected from a group comprising synthetic acrylic-based polymers, carboxymethyl cellulose, and fumed silica, or combinations thereof.

Such a thickening agent may be added in the first coating layer for rheology control.

According to a second aspect there is provided a packaging material for foodstuff comprising the substrate described above.

According to a third aspect there is provided a method for producing a substrate for foodstuff packaging material, comprising: providing a substrate comprising cellulose fibres, wherein the cellulose fibres are recycled cellulose fibres, the substrate having a first major surface opposite a second major surface, preparing a first coating dispersion to a dry matter content of 20-65%, the coating dispersion comprising 20-45% by weight of starch, 10-35% by weight of latex and 35-55% by weight of pigment, wherein a ratio of latex to starch is 0.25:1 to 2.5:1 in the first coating dispersion, wherein the latex is selected from a group comprising styrene-butadiene latex, styrene-acrylate latex, polyvinylacetate latex, or any combination thereof, applying the first coating dispersion as a first coating layer on at least a portion of the first major surface to a total dry matter weight of 4-15 g/m², and further comprising preparing an intermediate coating dispersion to a dry matter content of 15-50%, the intermediate coating dispersion comprising 20-50% by dry weight starch, and 50-80% by dry weight pigment, applying the intermediate coating dispersion on at least a portion of the first major surface as an intermediate coating layer before applying the first coating dispersion on the intermediate coating layer, the intermediate coating dispersion being applied to a dry matter coating weight of 2-3 g/m².

The solvent of the dispersion may be water. Water may be added for viscosity adjustments of the dispersion. The coating dispersion may be prepared by mixing starch with latex and pigment. The starch may be dissolved in the solvent by means of increasing the temperature/cooking the mixture and thereafter the other components of the coating dispersion may be added. Preferred dry matter content of the dispersion is dependent on the application method. In an inline coating process, the dry matter content may be 40-60%.

The first coating dispersion may be applied on the first major surface in two or more subsequent coating applications.

The coating dispersion may be applied in 2-5, 2-4 or 2-3 subsequent coating applications. The first coating layer may, hence, comprise a set of 2-5, 2-4 or 2-3 sublayers arranged on each other on the first major surface.

The method may further comprise drying of the first coating layer after application of the first coating dispersion on the first major surface of the substrate.

If there are more than two applications, there may be a drying step after each application before the next coating application. Drying may be performed by means of e.g. IR and/or steam boxes. The drying time may depend on the drying method, the dry matter content of the dispersion and the humidity level of the substrate before applying the coating layer.

The method may further comprise preparing an intermediate coating dispersion to a dry matter content of 15-50%, the intermediate coating dispersion comprising 20-40% by dry weight starch, and 60-80% by dry weight pigment, applying the intermediate coating dispersion on at least a portion of the first major surface as an intermediate coating layer before applying the first coating dispersion on the intermediate coating layer, the intermediate coating dispersion being applied to a dry matter coating weight of 2-3 g/m².

The first coating dispersion may be applied on the first major surface in an online coating process.

Such an online coating process may use a rolling rod coater, a blade coater or a bent blade at the end section of a board machine. A bent blade coater or similar equipment could preferably be used to produce a coating layer having a low coat weight which covers the surface although there may be thickness variations in the substrate first major surface. Being able to apply the coating layer online in a board machine coating section, may be cost saving compared to offline coating as need of logistics and extra handling is reduced. The substrate may be a web substrate.

The first coating dispersion may be applied on the first major surface in an offline coating process.

Coating offline may take place using a flexography printing technique applying the coating layer with an anilox roll in at least two printing units with sufficient drying between.

### Brief description of the drawings

Fig. 1 shows a packaging material for foodstuff.
Fig. 2 is a schematic cross-sectional view of a substrate for a foodstuff packaging material, the substrate having a first coating layer arranged on a first major surface thereof.
Fig. 3 is a schematic cross-sectional view of a substrate for a foodstuff packaging material. On a major surface of the substrate is provided an intermediate coating layer, a first coating layer and a second coating layer.
Fig. 4 is a graph showing results from Heptane Vapor Transmission Rate (HVTR)-analyses of substrates being provided with coating layers of different compositions of the included components starch, latex and pigment.

### Detailed Description

When using packaging material made from recycled cellulose fibres in food packaging applications there is a risk that harmful chemicals, such as mineral oil, may migrate from the recycled fibres in the packaging material into foodstuff contained in the packaging material. Such mineral oils are believed to mostly originate from print ink remainders in the recycled fibres. If fresh cellulose fibres are used for the packaging material, there is a risk that harmful chemicals may migrate through the packaging material from print ink used in printing on the outer surface of the packaging material into foodstuff contained in the packaging material.

In Fig 2 is illustrated a schematic cross-sectional view of a sheet-like cellulose-based substrate 2 of a packaging material 1 for foodstuff, see Fig. 1. The substrate may comprise fresh cellulose fibres, recycled cellulose fibres or a mixture thereof. The substrate 1 has a first major surface 2a and a second major surface 2b.

In one non-limiting example, the substrate may comprise about 100% recycled fibres and comprise four joined sheet-like sublayers. In such a substrate, the top sublayer may comprise recycled paper comprising less printing inks and more fillers, e.g. carbonates, than the other sublayers to promote a top surface with improved brightness. The top sublayer having a total basis weight of 15-30 g/m². The layer between the top sublayer and a middle sublayer may consist of recycled fibres from raw material such as waste liquid packaging holding strong fibres and less fillers than the other sublayers. This sublayer having a total basis weight of 20-40 g/m². The middle sublayer may comprise recycled fibres originating from mixed waste board and papers and may comprise the largest part of the board basis weight, between 150-450 g/m². The bottom sublayer may consist of recycled fibres from raw material such as waste liquid packaging holding strong fibres and less fillers than the other sublayers. The bottom sublayer having a total basis weight of 15-30 g/m². The sublayers being joined in a wet section of a board machine through wet compression. A sizing agent, e.g. starch, could be used between layers to secure the attachment. The thickness of such a substrate may be between 350 and 730 µm.

The packaging material 1 may be composed of one substrate 2 or a portion of a substrate 2 folded into the final packaging material 1. Alternatively, the substrate 2 may constitute a portion of the packaging material 1, e.g. constitute at least a portion of one or more sidewalls of the packaging material 1.

The first major surface 2a of the substrate 1 (the surface of the bottom sublayer in the above exemplified substrate) may be provided with a first coating layer 3 on at least a portion thereof. In the packaging material 1, the substrate 2 may be arranged such that the first major surface 2a with the first coating layer 3 is arranged to face foodstuff contained in the packaging material 1 and the second major surface 2b of the substrate 2 arranged to face away from the foodstuff, i.e. the first coating layer 3 may cover at least a portion of the inside of the final packaging material 2. The first coating layer 3 of the first major surface 2a of the substrate 2 could be in direct contact with foodstuff contained in the packaging material 1 or in indirect contact with the foodstuff, e.g. via an inner package, such as for example a plastic bag.

The first coating layer 3 is arranged to prevent or at least reduce the migration of organic substances, e.g. mineral oil, from/through the substrate 2 into foodstuff contained in the packaging material 1.

The first coating layer 3 comprises starch, e.g. potato starch, maize starch, wheat starch, tapioca starch, pea starch, or combinations thereof, latex, e.g. styrene-butadiene latex, styrene-acrylate latex, polyvinylacetate latex, biolatex, or any combination thereof, and pigment, e.g. kaolin, talc, or a combination thereof.

The first coating layer 3 may have a total dry matter weight of 4-15 g/m². A thickness of such a first coating layer may be 1-100 µm. The first coating layer 3 comprises starch, amounting to 20-45 percent by weight of the total dry matter weight of the coating layer 3, latex, amounting to 10-35 percent by weight of the total dry matter weight of the coating layer 3, and pigment, amounting to 35-55 percent by weight of the total dry matter weight of the coating layer 3, wherein a ratio of latex to starch is 0.25:1 to 2.5:1.

The first coating layer 3 may be applied on the first major surface 2a of the substrate in a lab-on-a-bench process, an online coating process, e.g. by using a rolling rod coater, a blade coater or a bent blade e.g. at the end section of a board machine. The first coating layer 3 may alternatively be applied on the first major surface of the substrate 2 in an offline coating process, e.g. by using a flexography printing machine. The substrate may be a web substrate.

A first coating dispersion, with a dry matter content of 35-65%, may be prepared by mixing 20-45 percent by weight of starch, 35-50 percent by weight of pigment and 10-35 percent by weight of latex in a solvent being e.g. aqua. The ratio of latex to starch in the dispersion may be 0.25:1 to 2.5:1. Thereafter the first coating dispersion is applied on the first major surface 2a of the substrate 2 to a total dry matter weight of 4-15 g/m².

The temperature of the first coating dispersion may be 15-60°C or 30-50°C. Thereafter, the first coating layer may be dried. The coating solution may be applied on the surface in one or more subsequent coating applications with a drying step, e.g. by using IR, in between.

In Heptane Vapor Transmission Rate (HVTR) analyses migration of heptane during 24 hours through such substrates provided with first coating layers may be measured. The migration of mineral oils through a substrate may also be tested as mg/dm² after 10 days at 40°C according to DIN EN 14338 Migration of Mineral Oils (MOSH and MOAH) into Tenax (modified polyphenylene oxide) performed at an accredited laboratory.

The first coating layer 3 may be arranged directly on the first major surface 2a of the substrate 2. Alternatively, there may be arranged one or more intermediate layers 4 between the first major surface 2a of the substrate 2 and the first coating layer 3, see Fig. 3. This intermediate coating layer may be a so-called surface sizing layer. It may have a total dry matter weight of 2-3 g/m² and comprise starch, amounting to 20-50 percent by weight of the total dry matter weight of the coating layer, and pigment, amounting to 50-80 percent by weight of the total dry matter weight of the coating layer.

As seen in Fig. 3, a second coating layer 5 comprising poly ethylen may be applied on at least a portion of the first coating layer 3 to increase water and fat resistance of the substrate surface. The second coating layer may be applied in an extrusion process.

The top sublayer of the above exemplified substrate provides the second major surface 2b of the substrate 2 and may be coated with one or more pigmented coating layers 6 to increase surface brightness, roughness and printability of the substrate. Such a pigmented coating layer may comprise 80-90% coating pigments such as calcium carbonate, calcined kaolin clay, kaolin clay or titanium dioxide and 10-20% binder such as latex.

The substrate with the first coating layer (and alternatively also an intermediate coating layer) may be entirely pulpable and recycled to a paperboard mill process.

### Experimental

The following presentation of experimental tests performed is, for simplicity reasons, possibility to make comparisons and to prove the concept, limited to one type of substrate, i.e. a substrate described above comprising about 100% recycled cellulose fibres. The substrate having four joined sheet-like sublayers, a pigmented coating layer of approximately 20 µm comprising conventional coating pigments and latex on the second major surface. The basis weight of the substrate constitutes the only variation between substrates used for the different tests described below. The experimental tests presented below are for the same reasons limited to first coating layers comprising one type of starch, pigment and latex.

### Laboratory scale tests

### First coating dispersion preparation

A starch dispersion was prepared by mixing dry high-viscous potato starch having a molecular weight of approximately 5 000 000 g/mole with water to a dry matter content of approximately 15% (pH in solution about 5.5), cooking the starch slurry in a continuous starch cooker at about 120°C and thereafter diluting the starch dispersion to a dry matter content of about 10%.

A pigment, kaolin clay, slurry (in water) of dry matter content of about 68% was prepared in double sets of vessels and the cooked starch was added to each set of vessels to different mass ratios spanning from 30:70 to 55:45 of starch:pigment.

Thereafter, styrene-butadiene latex with a particle size of 90 nm and a Tg of 11°C, dispersed in water to a dry matter content of approximately 50%, was added to the first set of vessels to different ratios, such that the ratio of the sum of the mass of starch and latex to the mass of pigment in the dispersions in each vessel was about 55, except in two vessels where the first vessel contained no latex and the second vessel contained no starch. Styrene-butadiene latex with a particle size of 145 nm and a Tg of 11°C, and a dry matter content of about 55% was added to the second set of vessels to different ratios, such that the ratio of the sum of the mass of starch and latex to the mass of pigment in the dispersions in each vessel was about 55, except in two vessels where the first vessel contained no latex and the second vessel contained no starch.

All coating dispersions were diluted to a common dry content of about 23%.

### Laboratory coating tests

The first coating dispersions from the first set of vessels and the second set of vessels were applied at room temperature on the first major surface of respective substrates having a basis weight of 300 g/m². The first coating layer being applied on the substrates using an RK Print Coat (RK Printcoat Instrument, model KCC 202) using a grooved rod number 4 (black, 20µm wet film) at a speed of 8 m/min to a dry matter coating weight of approximately 10 g/m² and dried in an oven at 150°C for about 30 seconds. The substrates used were coated on the first major surface with a surface sizing coating dispersion before applying the first coating layer. The surface sizing coating layer comprising starch and kaolin clay having a mass ratio of dry starch:kaolin of 26:74 and a dry matter weight of 2.5 g/m².

### Analysis

The properties of the coating layers were evaluated using Heptane Vapor Transmission Rate (HVTR)-analyses (see description of the analysis in the summary section). The results from such measurements are shown in Table 1 for the different coating compositions and are also visualized in Fig. 4 (only latex with a particle size of 90 nm is shown in the graph). Each HVTR-value is the average HVTR-value from two different experiments performed at different times.

**Table 1: HVTR values for substrates with first coating layers having different compositions**

| **Sample** | **Ratio Latex/Starch** | **HVTR g/m²/day (no latex)** | **HVTR g/m²/day (latex particle size 90 nm)** | **HVTR g/m²/day (latex particle size 145 nm)** |
|---|---|---|---|---|
| Substrate with surface sizing coating layer | - | 1650 | - | - |
| Sample 1 | no latex | 35 | - | - |
| Sample 2 | 0.1 | - | 100 | 110 |
| Sample 3 | 0.3 | - | 55 | 60 |
| Sample 4 | 0.75 | - | 20 | 35 |
| Sample 5 | 1.45 | - | 45 | 50 |
| Sample 6 | 2.45 | - | 70 | 60 |
| Sample 7 | 2.8 | - | 100 | not measured |
| Sample 8 | no starch | - | 209 | 240 |

For a reference substrate with a 2.5 g/m² surface sizing coating layer on the first major surface and no first coating layer the result from the HVTR analysis was 1650 g/m²/day. Samples 1-8 show the HVTR results for the same substrate but provided with first coating layers 3 of different compositions.

As can be seen from Table 1 and Fig. 4, it is clear that samples 3-6 result in lower HVTR-values than samples 2 and 7, and, hence, in coating layers through which there is a lower degree of hydrocarbon migration. Samples 3-6 have a latex to starch ratio of 0.3 to 2.45. From the table and graph in Fig. 4 it is also seen that sample 4, having a latex to starch ratio of 0.75, gives the lowest HVTR-values in the analyses. A ratio of latex to starch of 0.25:1 to 1.5:1, i.e. including samples 3-5 identifies a limited range within which there is a clear improvement, i.e. reduction in HVTR-value compared to other latex to starch ratios.

A first coating layer comprising no starch, sample 8, was measured in the HVTR-analysis to 209 g/m²/day and a substrate with a first coating layer comprising no latex, sample 1, to 35 g/m²/day. Hence, a first coating layer comprising starch and pigment but no latex result in low HVTR-values. Such a surface coating is, however, more brittle than a surface coating comprising latex and may be more easily damaged by mechanical disturbance.

The sample without latex, sample 1, and sample 4 were creased using laboratory creasing equipment Toggle Press (Smart and Brown H/C Tools Ltd. with Patra Carton Board creaser). This method is used to simulate the preparation of folded boxes in the printing and cutting process of the substrate. When the board is bent there is a risk of damaging the first coating layer. After creasing, the HVTR-result for sample 1 (no latex) was 420 g/m²/day, while for sample 4 the result was 240 g/m²/day. These results indicate that the use of latex in the coating layer reduces the risk of damaging the coating layer upon bending of the substrate and that such a coating layer endure creasing to a higher extent than a coating layer comprising no latex and therefore should be more suitable for a surface coating on a substrate of a food package. Latex makes the first coating layer less prone to be damaged in case of mechanical disturbance

As can be seen from Table 1, a latex particle size of 90 nm and 145 nm, respectively, give approximately the same HVTR-values, and the latex particle size does not seem to have any impact on the properties of the first coating layers.

### Coating tests

A first coating dispersion was prepared by mixing a low-viscous potato starch with a molecular weight of 200 000 g/mole with water, cooking the mixture at about 120°C and thereafter diluting the starch dispersion to a dry matter content of about 35%. Kaolin clay and styrene butadiene latex (particle size 90 nm) was then added to the dispersion to a mass ratio of 22:32:46 while mixing (as sample 4 in the laboratory tests) and was diluted to a common dry content of 50%.

### Surface sizing coating dispersion

A surface sizing coating dispersion was prepared by mixing in water the same low-viscous starch and kaolin clay as used for the first coating dispersion to a mass ratio of dry starch:kaolin of 26:74 and a common dry content of 40%.

### Experiment 1

In a first experiment, the coating dispersion was applied on the first major surface of the substrate in an offline pilot coating machine with two coaters inline. The surface sizing coating dispersion was applied to a substrate with a basis weight of approximately 300 g/m² to a total coat weight of approximately 2.5 g/m² in a first coating station utilizing a rolling rod. The surface sizing coating layer was thereafter dried using electrical IR-driers.

Thereafter the first coating dispersion was applied on the surface sizing coating layer with a blade coater in a second coating station to a coat weight of approximately 5 g/m². The first coating layer was thereafter dried using electrical IR-driers and/or a steam box drier.

### Experiment 2

In a second experiment the same offline pilot coating machine and substrate as was used in the first experiment was used. The first coating dispersion was applied directly on the first major surface of the substrate (no surface sizing coating was applied) in two coating steps utilizing a blade coater. The first coating dispersion was applied to a coat weight of approximately 3.5 g/m² in both coating layers. The first coating layer was dried using electrical IR-driers and the second coating layer using a steam box drier.

### Experiment 3

In a third experiment the first coating dispersion was applied online on a full-scale board machine with a rolling rod coater on the first major surface of the substrate, the substrate having a basis weight of approximately 400 g/m². The coating was applied in one coating step, total coat weight about 7.5 g/m², without an intermediate surface sizing coating layer. The first coating layer was thereafter dried using electrical IR-driers and/or a steam box drier.

### Experiment 4

In a fourth experiment the first coating dispersion was coated on the first major surface of a substrate having a basis weight of 280 g/m² using a flexography full-scale test machine offline in two subsequent coating layers, each coating layer having a coat weight of about 3 g/m². A surface sizing coating dispersion was applied to the substrate to a total coat weight of approximately 2.5 g/m² before applying the first coating layer.

### Analyses

The properties of the coating layers from the four different coating experiments described above were evaluated using Heptane Vapor Transmission Rate (HVTR)-analyses and with the Tenax procedure with HPLC-GC-FID-analysis as performed by ISEGA (see description of the analysis in the summary section).

The results from the analyses are shown in Table 2.

**Table 2: HVTR and MOSH(C20-35) / MOAH(C16-35) values for substrates coated in four different ways**

| **Sample** | **Coating** | **HVTR g/m²/day** | **MOSH(C20-35) / MOAH(C16-35) 40°c, 10 days, mg/dm²** |
|---|---|---|---|
| | Substrate with no coating | 1650 | 0.61/0.10 |
| Experiment 1 | 2.5 g/m² surface sizing layer + 5 g/m² first coating layer | 20 | 0.12<0.08 |
| Experiment 2 | 7 g/m² first coating layer applied in two subsequent coatings (3.5 g/m² + 3.5 g/m²) | 60 | 0.29<0.08 |
| Experiment 3 | 7.5 g/m² first coating layer applied in one coating | 40 | 0.25/<0.08 |
| Experiment 4 | 2.5 g/m² surface sizing layer + 6 g/m² first coating layer applied in two subsequent coatings (3 g/m² + 3 g/m²) | 25 | not measured |

As can be seen from Table 2, the values for the experiments in which a surface sizing coating layer was used, Experiment 1 and 4, are somewhat lower than the values from experiments in which no surface sizing layer was used. This indicates that the use of a surface sizing coating layer could improve the barrier quality of the first coating layer.

A first coating layer applied in one layer or in two subsequent layers resulted in approximately the same results in the analyses.

As seen from experiment 3 the coating of a substrate in an online process was possible, resulting in coating layer properties being comparable to coatings applied offline.

It is also seen from Table 2 that the HVTR-values and the MOSH/MOAH-values correspond. An experiment with a higher HVTR-value also showed higher MOSH/MOAH-values.

### Further processing

The pilot coated material from experiment 1, i.e. a substrate 2 having a coating on its first major surface 2a comprising a 2.5 g/m² surface sizing layer 4 and a 5 g/m² first coating layer 3, was further processed in a full-scale process line by sheeting, printing, gluing into boxes and filling with pasta. In Table 3 such a coated substrate is followed through such a further process using HVTR and MOSH/MOAH analyses to analyse how such processing steps affect the barrier properties of the first coating layer 3 of the substrate 2.

**Table 3: HVTR and MOSH/MOAH values for a coated substrate from experiment 1 after different further processing steps.**

| **Further processing step** | **HVTR g/m²/day** | **MOSH C20-35/MOAH(C16-35) 40°c, 10 days, mg/dm²** |
|---|---|---|
| No further process step | 20 | 0.12/<0.08 |
| Rewinded and sheeted | 80 | 0.28/<0.08 |
| Printed and cut | 60 | 0.29/<0.08 |
| Glued into box | 120 | 0.34/<0.08 |
| Filled box | 120 | 0.33/<0.08 |

As can be seen from Table 3, the HVTR-values increased after the further processing steps, while the MOSH/MOAH-values remained low and stable. This indicates that the first coating layer may be affected by the mechanical processing such that the surface may be penetrable for smaller molecules measured with the HVTR-analysis, while larger molecules such as the measured MOSH and MOAH do not migrate through the first coating layer.

The pilot coated material from experiment 3 above, i.e. a substrate having a coating on its first major surface comprising a 7.5 g/m² first coating layer applied on the first major surface of the substrate in one application, was further processed in a full-scale process line by sheeting, printing, gluing into boxes and filling with pasta. In Table 4 such a coated substrate is followed through such a further process using HVTR and MOSH/MOAH analyses to analyse how such processing steps affect the barrier properties of first coating layer of the substrate.

**Table 4: HVTR and MOSH/MOAH values for a coated substrate from experiment 3 after different further processing steps.**

| **Further processing step of substrate from experiment 3** | **HVTR g/m²/day** | **MOSH C20-35/MOAH(C16-35) 40°c, 10 days, mg/dm²** |
|---|---|---|
| Sheeted | 40 | 0.25/<0.08 |
| Printed and cut | 30 | not measured |
| Glued into box | 40 | not measured |
| Filled box | 60 | not measured |

As shown in Table 4, the first coating layer can also be applied in one coating application to a coat weight of 7.5 g/m² without an intermediate surface sizing layer with satisfying mineral oil barrier properties and maintain the properties throughout the further processing steps to a finished food package. The barrier property measured as HVTR even improves over time from production to printing. Possibly the higher coat weight and absence of drying between layers allows the barrier to undergo certain annealing over time, which closes the surface for penetration of small molecules.

The material from experiment 2, i.e. a substrate with a 7 g/m² first coating layer applied in two subsequent coatings (3.5 g/m² + 3.5 g/m²) was printed and cut and showed a HVTR-value of 60 after printing and a value of 40 after cutting.

### Long-term test

Long-term tests were also performed on the samples from experiment 1 and 3 and the HVTR-values are shown in Table 5. The coated substrates were analysed immediately after coating, 6 months after coating and 12 months after coating.

**Table 5. HVTR for a coated substrate after different further processing steps**

| **Sample** | **HVTR g/m²/day after 0 months from production** | **HVTR g/m²/day after 6 months from production** | **HVTR g/m²/day after 12 months from production** |
|---|---|---|---|
| Sample from experiment 1 | 20 | 20 | 20 |
| Sample from experiment 3 | 50 | 30 | not measured |

The long-term tests showed that the barrier properties of the first coating layers were maintained with time and showed low HVTR-values also after 6 months. It seems as if the first coating layer of the sample from experiment 3, a coating comprising a 7.5 g/m² first coating layer applied in one application, may undergo a higher degree of annealing over time than the first coating layer of the sample from experiment 1, i.e. a coating layer applied in one application may overtime undergo further tightening due to a drying effect of the matrix than a coating layer applied in two applications (i.e. two thinner coating layer applied on top of each other) with a drying step in between.

## Claims

1. A substrate (2) for foodstuff packaging material (1), the substrate (2) comprising cellulose fibres, wherein the cellulose fibres of the substrate (2) are recycled cellulose fibres, and having a first major surface (2a) opposite a second major surface (2b) and a first coating layer (3) arranged on at least a portion of the first major surface (2a), wherein
the first coating layer (3) has a total dry matter weight of 4-15 g/m²and comprises a composition of
starch, amounting to 20-45 percent by weight of the total dry matter weight of the first coating layer,
latex, amounting to 10-35 percent by weight of the total dry matter weight of the first coating layer, wherein the latex is selected from a group comprising styrene-butadiene latex, styrene-acrylate latex, polyvinylacetate latex or any combination thereof, and
pigment, amounting to 35-55 percent by weight of the total dry matter weight of the first coating layer,
wherein a ratio of latex to starch is 0.25: 1 to 2.5: 1,
wherein the substrate further comprising an intermediate coating layer (4) arranged on the first major surface (2a) of the substrate (2) beneath the first coating layer (3), wherein the intermediate coating layer (4) has a total dry matter weight of 2-3 g/m² and comprises starch, amounting to 20-50 percent by weight of the total dry matter weight of the intermediate coating layer (4), and pigment, amounting to 50-80 percent by weight of the total dry matter weight of the intermediate coating layer (4).

2. The substrate (2) of claim 1, wherein the first coating layer (3) has a total dry matter weight of 4-10 g/m², or 4-8 g/m².

3. The substrate (2) of any of the preceding claim, wherein starch amounts to 25-40 or 30-35 percent by weight of the total dry matter weight of the first coating layer (3).

4. The substrate (2) of any of the preceding claims, wherein latex amounts to 15-35, or 20-30 percent by weight of the total dry matter weight of the first coating layer (3).

5. The substrate (2) of any of the preceding claims, wherein pigment amounts to 35-50, or 40-45 percent by weight of the total dry matter weight of the first coating layer.

6. The substrate (2) of any of the preceding claims, wherein a ratio of latex to starch in the first coating layer (3) is 0.5: 1 to 1: 1.

7. The substrate (2) of any of the preceding claims, wherein the starch is selected from a group comprising potato starch, maize starch, wheat starch, tapioca starch and pea starch, or any combination thereof, and the molecular weight of the starch is 200 000 to 5 000 000 g/mol.

8. The substrate (2) of any of the preceding claims, wherein the pigment is a platelet forming pigment forming platelets having a length ranging from 0.01 to 100 µm, a width of from 0.01 to 100 µm and a height ranging from 0.001 to 1 µm, wherein the pigment is selected from a group comprising kaolin, talc, and a combination thereof.

9. The substrate (2) of any of the preceding claims, wherein the first coating layer (3) further comprises a thickening agent, amounting to 0.1-1.5 percent by weight of the total dry matter weight of the first coating layer, selected from a group comprising synthetic acrylic-based polymers, carboxymethyl cellulose, and fumed silica, or combinations thereof.

10. A packaging material (1) for foodstuff comprising the substrate of any of claims 1 to 9.

11. A method for producing a substrate (2) for foodstuff packaging material (1), comprising:
providing a substrate (2) comprising cellulose fibres, wherein the cellulose fibres are recycled cellulose fibres, the substrate having a first major surface (2a) opposite a second major surface (2b),
preparing a first coating dispersion to a dry matter content of 20-65%, the coating dispersion comprising 20-45% by weight of starch, 10-35% by weight of latex and 35-55% by weight of pigment, wherein a ratio of latex to starch is 0.25: 1 to 2.5: 1 in the first coating dispersion, wherein the latex is selected from a group comprising styrene-butadiene latex, styrene-acrylate latex, polyvinylacetate latex, or any combination thereof,
applying the first coating dispersion as a first coating layer (3) on at least a portion of the first major surface (2a) to a total dry matter weight of 4-15 g/m², and further comprising preparing an
intermediate coating dispersion to a dry matter content of 15-50%, the intermediate coating dispersion comprising 20-50% by dry weight starch, and 50-80% by dry weight pigment, applying the intermediate coating dispersion on at least a portion of the first major surface (2a) as an intermediate coating layer (4) before applying the first coating dispersion on the intermediate coating layer (4), the intermediate coating dispersion being applied to a dry matter coating weight of 2-3 g/m².

## Patentansprüche

1. Substrat (2) für Lebensmittelverpackungsmaterial (1), wobei das Substrat (2) Cellulosefasern umfasst, wobei die Cellulosefasern des Substrats (2) recycelte Cellulosefasern sind, und eine erste Hauptoberfläche (2a) gegenüber einer zweiten Hauptoberfläche (2b) und eine erste Beschichtungsschicht (3) auf wenigstens einem Teil der ersten Hauptoberfläche (2a) angeordnet aufweist, wobei
die erste Beschichtungsschicht (3) ein Gesamttrockengewicht von 4-15 g/m² aufweist und eine Zusammensetzung umfasst aus
Stärke in einer Menge von 20-45 Gew.-% des Gesamttrockengewichts der ersten Beschichtungsschicht,
Latex in einer Menge von 10-35 Gew.-% des Gesamttrockengewichts der ersten Beschichtungsschicht, wobei der Latex ausgewählt ist aus einer Gruppe umfassend Styrol-Butadien-Latex, Styrol-Acrylat-Latex, Polyvinylacetat-Latex oder eine beliebige Kombination davon, und
Pigment in einer Menge von 35-55 Gew.-% des Gesamttrockengewichts der ersten Beschichtungsschicht,
wobei ein Verhältnis von Latex zu Stärke 0,25: 1 bis 2,5: 1 beträgt,
wobei das Substrat ferner eine Zwischenbeschichtungsschicht (4) umfasst, die auf der ersten Hauptoberfläche (2a) des Substrats (2) unter der ersten Beschichtungsschicht (3) angeordnet ist, wobei die Zwischenbeschichtungsschicht (4) ein Gesamttrockengewicht von 2-3 g/m² aufweist und Stärke in einer Menge von 20-50 Gew.-% des Gesamttrockenmassegewichts der Zwischenbeschichtungsschicht (4) und Pigment in einer Menge von 50-80 Gew.-% des Gesamttrockengewichts der Zwischenbeschichtungsschicht (4) umfasst.

2. Substrat (2) nach Anspruch 1, wobei die erste Beschichtungsschicht (3) ein Gesamttrockengewicht von 4-10 g/m² oder 4-8 g/m² aufweist.

3. Substrat (2) nach einem der vorstehenden Ansprüche, wobei Stärke 25-40 oder 30-35 Gew.-% des Gesamttrockengewichts der ersten Beschichtungsschicht (3) ausmacht.

4. Substrat (2) nach einem der vorstehenden Ansprüche, wobei Latex 15-35 oder 20-30 Gew.-% des Gesamttrockengewichts der ersten Beschichtungsschicht (3) ausmacht.

5. Substrat (2) nach einem der vorstehenden Ansprüche, wobei das Pigment 35-50 oder 40-45 Gew.-% des Gesamttrockengewichts der ersten Beschichtungsschicht ausmacht.

6. Substrat (2) nach einem der vorstehenden Ansprüche, wobei ein Verhältnis von Latex zu Stärke in der ersten Beschichtungsschicht (3) 0,5: 1 bis 1: 1 beträgt.

7. Substrat (2) nach einem der vorstehenden Ansprüche, wobei die Stärke ausgewählt ist aus einer Gruppe umfassend Kartoffelstärke, Maisstärke, Weizenstärke, Tapiokastärke und Erbsenstärke oder eine beliebige Kombination davon, und das Molekulargewicht der Stärke 200 000 bis 5 000 000 g/mol beträgt.

8. Substrat (2) nach einem der vorstehenden Ansprüche, wobei das Pigment ein plättchenbildendes Pigment ist, das Plättchen mit einer Länge in dem Bereich von 0,01 bis 100 µm, einer Breite von 0,01 bis 100 µm und einer Höhe in dem Bereich von 0,001 bis 1 µm bildet, wobei das Pigment ausgewählt ist aus einer Gruppe umfassend Kaolin, Talkum und eine Kombination davon.

9. Substrat (2) nach einem der vorstehenden Ansprüche, wobei die erste Beschichtungsschicht (3) ferner ein Verdickungsmittel in einer Menge von 0,1-1,5 Gew.-% des Gesamttrockengewichts der ersten Beschichtungsschicht ausgewählt aus einer Gruppe umfassend synthetische Polymere auf Acrylbasis, Carboxymethylcellulose und pyrogenes Siliciumdioxid oder Kombinationen davon umfasst.

10. Verpackungsmaterial (1) für Lebensmittel, umfassend das Substrat nach einem der Ansprüche 1 bis 9.

11. Verfahren zur Herstellung eines Substrats (2) für Lebensmittelverpackungsmaterial (1), umfassend:
Bereitstellen eines Substrats (2), das Cellulosefasern umfasst, wobei die Cellulosefasern recycelte Cellulosefasern sind, wobei das Substrat eine erste Hauptoberfläche (2a) gegenüber einer zweiten Hauptoberfläche (2b) aufweist,
Herstellen einer ersten Beschichtungsdispersion auf einen Trockenmassegehalt von 20-65 %, wobei die Beschichtungsdispersion 20-45 Gew.-% Stärke, 10-35 Gew.-% Latex und 35-55 Gew.-% Pigment umfasst, wobei ein Verhältnis von Latex zu Stärke 0,25: 1 bis 2,5: 1 in der ersten Beschichtungsdispersion beträgt, wobei der Latex ausgewählt ist aus einer Gruppe umfassend Styrol-Butadien-Latex, Styrol-Acrylat-Latex, Polyvinylacetat-Latex oder eine beliebige Kombination davon,
Aufbringen der ersten Beschichtungsdispersion als eine erste Beschichtungsschicht (3) auf wenigstens einen Teil der ersten Hauptoberfläche (2a) auf ein Gesamttrockengewicht von 4-15 g/m², und ferner umfassend Herstellen einer
Zwischenbeschichtungsdispersion auf einen Trockenmassegehalt von 15-50 %, wobei die Zwischenbeschichtungsdispersion 20-50 Gew.-% Trockengewicht an Stärke und 50-80 Gew.-% Trockengewicht an Pigment umfasst, Aufbringen der Zwischenbeschichtungsdispersion auf wenigstens einen Teil der ersten Hauptoberfläche (2a) als eine Zwischenbeschichtungsschicht (4) vor dem Aufbringen der ersten Beschichtungsdispersion auf die Zwischenbeschichtungsschicht (4), wobei die Zwischenbeschichtungsdispersion auf ein Trockenmasse-Beschichtungsgewicht von 2-3 g/m² aufgebracht wird.

## Revendications

1. Substrat (2) pour matériau d'emballage de produit alimentaire (1), le substrat (2) comprenant des fibres de cellulose, dans lequel les fibres de cellulose du substrat (2) sont des fibres de cellulose recyclées, et ayant une première surface principale (2a) opposée à une seconde surface principale (2b) et une première couche de revêtement (3) disposée sur au moins une partie de la première surface principale (2a), dans lequel
la première couche de revêtement (3) a un poids total de matière sèche de 4-15 g/m² et comprend une composition
d'amidon, représentant 20-45 pour cent en poids du poids total de matière sèche de la première couche de revêtement,
de latex, représentant 10-35 pour cent en poids du poids total de la matière sèche de la première couche de revêtement, dans lequel le latex est choisi dans un groupe comprenant un latex styrène-butadiène, un latex styrène-acrylate, un latex poly(acétate de vinyle) ou toute combinaison de ceux-ci, et
de pigment, représentant 35-55 pour cent en poids du poids total de matière sèche de la première couche de revêtement,
dans lequel un rapport du latex sur l'amidon est de 0,25: 1 à 2,5: 1,
dans lequel le substrat comprend en outre une couche de revêtement intermédiaire (4) disposée sur la première surface principale (2a) du substrat (2) sous la première couche de revêtement (3), la couche de revêtement intermédiaire (4) ayant un poids total de matière sèche de 2-3 g/m² et comprenant un amidon, représentant 20-50 pour cent en poids du poids total de matière sèche de la couche de revêtement intermédiaire (4), et un pigment, représentant 50-80 pour cent en poids du poids total de matière sèche de la couche de revêtement intermédiaire (4).

2. Substrat (2) selon la revendication 1, dans lequel la première couche de revêtement (3) a un poids total de matière sèche de 4-10 g/m², ou 4-8 g/m².

3. Substrat (2) selon l'une quelconque des revendications précédentes, dans lequel l'amidon représente 25-40 ou 30-35 pour cent en poids du poids total de matière sèche de la première couche de revêtement (3).

4. Substrat (2) selon l'une quelconque des revendications précédentes, dans lequel le latex représente 15-35, ou 20-30 pour cent en poids du poids total de matière sèche de la première couche de revêtement (3).

5. Substrat (2) selon l'une quelconque des revendications précédentes, dans lequel le pigment représente 35-50, ou 40-45 pour cent en poids du poids total de matière sèche de la première couche de revêtement.

6. Substrat (2) selon l'une quelconque des revendications précédentes, dans lequel un rapport de latex sur amidon dans la première couche de revêtement (3) est de 0,5: 1 à 1: 1.

7. Substrat (2) selon l'une quelconque des revendications précédentes, dans lequel l'amidon est choisi dans un groupe comprenant l'amidon de pomme de terre, l'amidon de maïs, l'amidon de blé, l'amidon de tapioca et l'amidon de pois, ou toute combinaison de ceux-ci, et le poids moléculaire de l'amidon est de 200 000 à 5 000 000 g/mol.

8. Substrat (2) selon l'une quelconque des revendications précédentes, dans lequel le pigment est un pigment formant des plaquettes, formant des plaquettes ayant une longueur allant de 0,01 à 100 µm, une largeur allant de 0,01 à 100 µm et une hauteur allant de 0,001 à 1 µm, dans lequel le pigment est choisi dans un groupe comprenant le kaolin, le talc et une combinaison de ceux-ci.

9. Substrat (2) selon l'une quelconque des revendications précédentes, dans lequel la première couche de revêtement (3) comprend en outre un agent épaississant, représentant 0,1-1,5 pour cent en poids du poids total de matière sèche de la première couche de revêtement, choisi dans un groupe comprenant des polymères synthétiques à base d'acrylique, une carboxyméthylcellulose et une silice fumée, ou des combinaisons de ceux-ci.

10. Matériau d'emballage (1) pour produit alimentaire comprenant le substrat selon l'une quelconque des revendications 1 à 9.

11. Procédé de production d'un substrat (2) pour matériau d'emballage de produit alimentaire (1), comprenant :
fourniture d'un substrat (2) comprenant des fibres de cellulose, les fibres de cellulose étant des fibres de cellulose recyclées, le substrat ayant une première surface principale (2a) opposée à une deuxième surface principale (2b),
préparation d'une première dispersion de revêtement à une teneur en matière sèche de 20-65 %, la dispersion de revêtement comprenant 20-45 % en poids d'amidon, 10-35 % en poids de latex et 35-55 % en poids de pigment, dans lequel un rapport de latex sur amidon est de 0,25: 1 à 2,5: 1 dans la première dispersion de revêtement, le latex étant choisi dans un groupe comprenant un latex de styrène-butadiène, un latex de styrène-acrylate, un latex de poly(acétate de vinyle), ou une combinaison de ceux-ci,
application de la première dispersion de revêtement en tant que première couche de revêtement (3) sur au moins une partie de la première surface principale (2a) jusqu'à un poids total de matière sèche de 4-15 g/m², et comprenant en outre la préparation d'une
dispersion de revêtement intermédiaire jusqu'à une teneur en matière sèche de 15-50 %, la dispersion de revêtement intermédiaire comprenant 20-50 % en poids sec d'amidon et 50-80 % en poids sec de pigment, application de la dispersion de revêtement intermédiaire sur au moins une partie de la première surface principale (2a) en tant que couche de revêtement intermédiaire (4) avant d'appliquer la première dispersion de revêtement sur la couche de revêtement intermédiaire (4), la dispersion de revêtement intermédiaire étant appliquée jusqu'à un poids de revêtement de matière sèche de 2-3 g/m².
